# EUROPEAN PATENT SPECIFICATION

(11) **EP 2 359 015 B1**
(45) Date of publication and mention of the grant of the patent: **31.07.2013**
(21) Application number: 09775234.9
(22) Date of filing: 09.12.2009
(51) Int. Cl.: F16C 9/04, F16J 1/14, F16J 1/16

(54) **PISTON BEARING ARRANGEMENT**
KOLBENLAGERANORDNUNG
AGENCEMENT DE PALIER DE PISTON

(30) Priority: 19.12.2008 FI 20086220
(43) Date of publication of application: 24.08.2011
(73) Proprietor: Wärtsilä Finland Oy, 65101 Vaasa (FI)
(72) Inventor: NYNÄS, Håkan, FIN-65280 Vasa (FI)
(74) Representative: Berggren Oy Ab
(86) International application number: PCT/FI2009/050990
(87) International publication number: WO 2010/070198

(56) References cited:
- AT-B- 369 874
- DE-C- 324 959
- JP-A- 60 023 670
- US-A- 5 701 802

## Description

### Technical field

The invention relates to a piston bearing arrangement for an internal combustion engine, including a piston with at least an upper part and a lower part being tightly fixed to each other, and a connecting rod having an upper end provided with piston pin means (fitted between and) turnably journalled to the piston in accordance with the preamble of claim 1.

### Background art

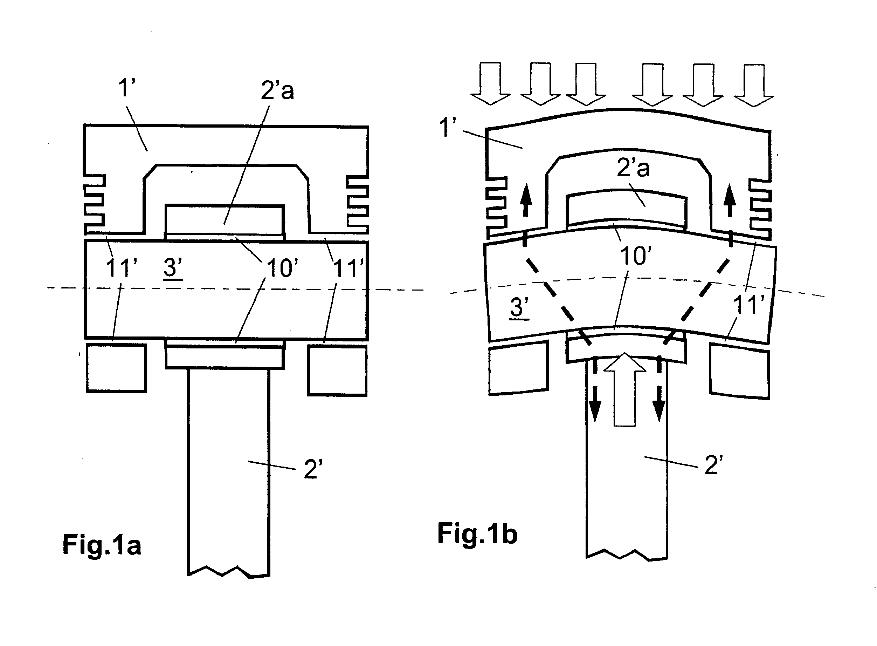

With reference to the attached figures 1 a and 1 b illustrating a typical prior art arrangement in an internal combustion engine force transmission between a piston 1' and a crank shaft (not shown) is arranged by means of a connecting rod 2', one end of which, in this connection called the lower end, is turnably attached to the crank shaft and the other end respectively, here called the upper end 2'a, is turnably attached to the piston 1' by means of a piston pin 3'. The arrangement includes a bearing surface 10' between the upper end 2'a of the connecting rod and the piston pin 3' as well as bearing surfaces 11' between the piston pin 3' and the piston 1'. As illustrated in figure 1b by arrows most of the bending loads on the piston pin 3' come from the gas forces in the cylinder, less from inertia and side forces from the crank mechanism. With increased need for higher cylinder outputs and higher cylinder maximum pressures there is a need for increased bearing surface areas to conform to the increased bending forces. Increased cylinder pressure affects most on the upper halves on the bearing surfaces. The bearing loads on the lower bearing halves, however, do not increase with increased cylinder pressure, but with piston weight and higher speed on the engine.

JP 60023670 A discloses a piston bearing arrangement according to the preamble of claim 1.

A known solution for increasing the bearing area is to utilise spherical bearing surfaces in the upper end of the connecting rod. A drawback with this solution is increased weight of the upper end of the connecting rod, whereby the connecting rod must be reinforced and balancing of the engine must be increased. Manufacturing of spherical bearing surfaces is also more challenging than conventional cylindrical bearing surfaces.

An object of the invention is to provide a novel piston bearing arrangement, which solves the above mentioned and other problems of the prior art. It is also an object of the invention to provide a reliable solution for coping with increased cylinder pressures and speeds utilised in internal combustion engines, specifically large diesel engines.

### Disclosure of the invention

The objects of the invention can be met substantially as is disclosed in claim 1 and in the other claims presenting more details of different embodiments of the invention.

The basic idea of the invention is to separate the way forces are transferred depending on the direction of the forces in each case. Hereby different bearing diameters and areas can be utilised so as to better conform to the different load requirements respectively and the whole construction may be optimised in accordance with the load conditions.

According to the invention the upper end of the connecting rod is provided with a first bearing surface turnably engaged with an inner surface of the upper part of the piston. The piston pin means include also a second and a third bearing surfaces placed on either side of the connecting rod and being located on the opposite side of the piston pin means with regard to the first bearing surface. Hereby the first bearing surface is utilised for taking up the load resulting from the combustion process in the cylinder in question, whereas the second and third bearing surfaces take up forces affecting in the direction of movement of the piston upwards. Since the downward forces are transferred directly to the connecting rod there are no bending loads in the piston pin.

The bearing surfaces have substantially the form of half a cylinder making them easy to manufacture. In addition the radius of curvature of the first bearing surface is with advantage made substantially bigger than that of the second and third bearing surfaces. Hereby the difference in load can be taken account of by different bearing areas respectively so that the first bearing surface is designed to have relatively larger bearing area.

In practice the radius of curvature of the first bearing surface is with advantage at least 60-70% bigger than the radius of the second and third bearing surfaces.

Further, the bearing surfaces have the same center of curvature which is preferably also the center of rotation of the upper end of the connecting rod.

In one practical embodiment the piston pin means comprise a separate piston pin inserted in the upper end of the connecting rod. Then the second and third bearing surfaces may with advantage overlap partly the first bearing surface in the direction of the axis of the piston pin means, whereby also the area of these bearing surfaces can be increased.

In another embodiment the piston pin means are arranged as an integral part of the upper end of the connecting rod. In this case machining on the upper end of the connecting rod may be more complicated, but on the other hand there is no bending or tension loads resulting from the drilling through the upper end of the connecting rod.

The piston pin means are provided with a relief at the position of the second and third bearing surfaces on the opposite side thereof with regard to the axis of the piston pin means. Since this part of the piston pin means is not involved with taking up forces and is thus not provided with bearing surfaces, material can with advantage be machined away to decrease the weight respectively.

The upper part and lower part of the piston are with advantage provided with separate bearing shell elements at the position of the bearing surfaces, said bearing shell elements being pressed to the respective bearing seats in said parts of the piston by bolting the upper part and the lower part together.

### Brief Description of Drawings

In the following the invention will be described, by way of example only, with the reference to the accompanying schematic drawing, in which
- figures 1 a and 1 b illustrate a typical prior art piston bearing arrangement,
- figure 2 illustrates schematically an upper end of a connecting rod in a piston bearing arrangement according the invention and the affecting forces,
- figure 3 illustrates a piston bearing arrangement according to the invention as a sectional view, and
- figures 4 and 5 illustrate some details of the upper end of a connecting rod.

### Detailed Description of Drawings

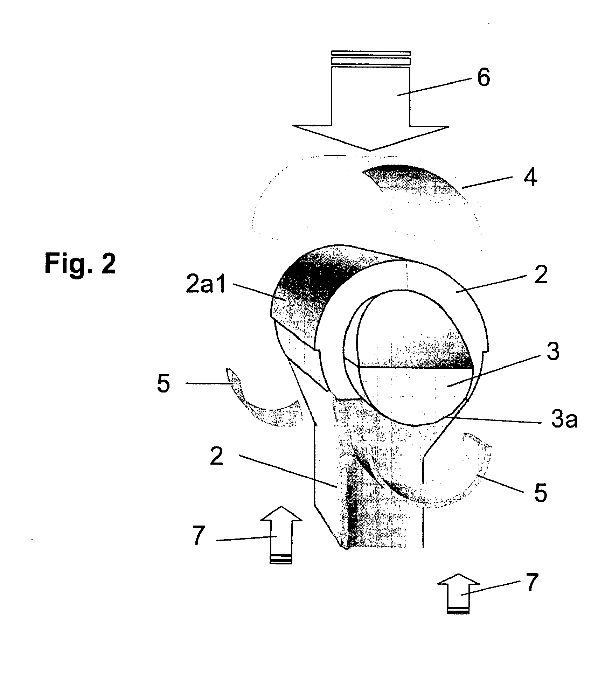

In the figures 2 - 5 reference numeral 1 indicates a piston of an internal combustion engine having an upper part 1 a and a lower part 1 b fixed together by tension bolts 8. An upper end 2a of a connecting rod 2 is turnably attached to the piston 1. For this purpose it is provided with a first bearing surface 2a1 which is turnably engaged with the upper part 1 a of the piston by means of a bearing shell element 4 fitted to a bearing seat 1a1 in the inner surface of the upper part 1 a of the piston. In addition the upper end 2a of the connecting rod 2 is provided with piston pin means 3 having a second and a third bearing surfaces 3a arranged to cooperate with bearing shell elements 5 arranged in bearing seats 1 b1 in the lower part 1 b of the piston 1.

As specifically apparent from figure 2 the bearing surfaces 2a1 and 5 are cylinder formed and cooperate with bearing shell elements 4 and 5 having cylindrical surfaces as well. Arrow 6 illustrates the load from the not-shown cylinder of an internal combustion engine. This load is taken up directly be the upper end 2a of the connecting rod, whereby it can be provided with a much larger bearing area 2a1 in comparison with the bearing area 10' arranged in the piston 1' according to the conventional arrangement shown in figure 1. As a consequence, since the larger load indicated by the arrow 6 and resulting mainly from the cylinder pressure affect directly on the upper end of the connecting rod with a larger than normal bearing surface area, any bending of the piston pin can be avoided.

On the other hand when the piston is moving upwards there are only inertia forces depending on the weight of the piston affecting on the lower surfaces of the piston pin means 3, illustrated by arrows 7 in figure 2. Thus these bearing surfaces 3a may be designed as in a conventional piston pin design.

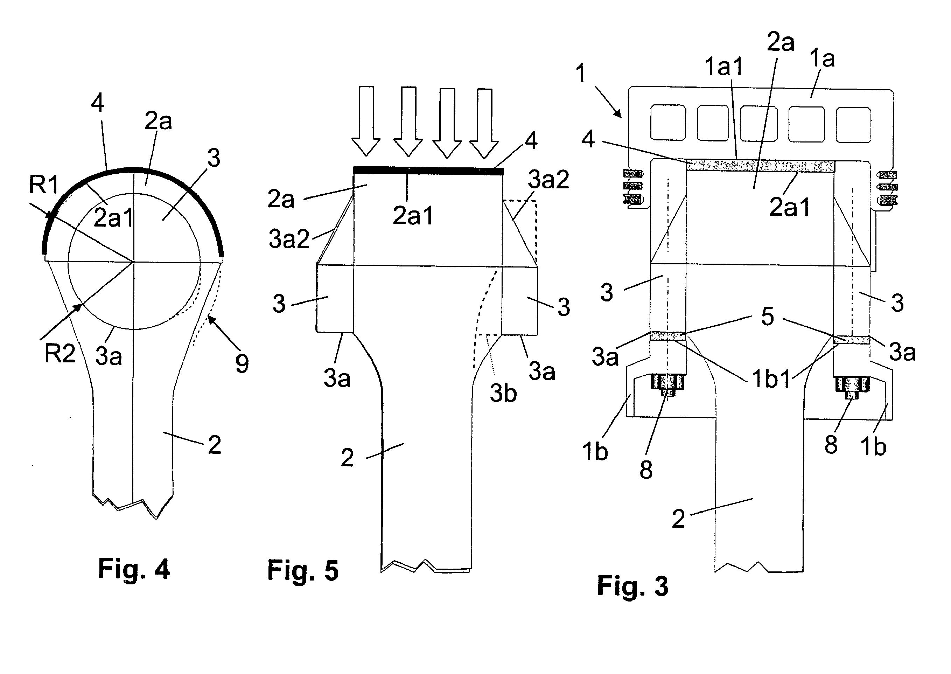

As obvious from figure 4 the radius of curvature R1 of the bearing surface 2a1 is substantially larger than the radius of curvature R2 of the bearing surfaces 3a. The larger is the radius R1 the larger is the area of the bearing surface 2a1 enabling it to take up bigger loads respectively. On the other hand with increased radius R1 also the weight of the upper end 2a on the connecting rod will increase, whereby the connecting rod must be reinforced for the added weight requiring rebalancing of the engine. As apparent the bearing surfaces have with advantage the same center of curvature which is also the center of rotation of the upper end 2a of the connecting rod.

Figure 5 illustrates two optional ways of implementing the piston pin means 3. It may be a separate piston pin locked in the upper end 2a of the connecting rod 2. In this case more material can be machined away from the connecting rod as illustrated by broken line resulting in an additional bearing surface 3b, whereby increased load can be taken up respectively if needed. As apparent from the figure 5 the joint bearing surfaces 3a and 3b overlap a bit with the bearing surface 2a1 in the direction of the axis of the piston pin, but this is has no negative effect since these bearing surface are operable in different moving directions of the connecting rod and the piston.

Alternatively the piston pin means 3 may be implemented as integral part of the upper end 2a of the connecting rod 2. In this case machining of the upper end 2a is more complicated and the lower bearing surfaces 3a remain relatively smaller. An advantage is, however, that hereby bending load resulting from the drilling through the upper end 2a of the connecting rod to make a hole for the piston pin can be avoided. In addition no traditional bending loads, as illustrated by the broken line 9 in figure 4, appear.

Whichever is the implementation of the piston pin means 3 the arrangement according to the invention allows for making a relief 3a2 (cf. figure 5) since no material is needed here due to the bearing surface 2a1 taking all the loads from upwards. Hereby the connecting rod can be made lighter. In case of a separate piston pin suitable locking means may be utilised to prevent rotation of the piston pin relative to the connecting rod so that the bearing surfaces 3a and 5 (cf. figures 2 and 3) remain mutually aligned.

It is clear that the invention is not limited to the examples mentioned above but can be implemented in many other different embodiments within the scope of the inventive idea.

## Claims

1. Piston bearing arrangement, for an internal combustion engine, including a piston (1) with at least an upper part (1a) and a lower part (1b) being tightly fixed to each other, and a connecting rod (2) having an upper end (2a) provided with piston pin means (3) fitted between said piston parts (1a,1b) and turnably journalled to the piston (1), the upper end (2a) of the connecting rod (2) being provided with a first bearing surface (2a1) turnably engaged with an inner surface of the upper part (1 a) of the piston (1), and the piston pin means (3) including a second and a third bearing surfaces (3a) placed on either side of the connecting rod (2) and being located on the opposite side of the piston pin means (3) with regard to the first bearing surface (2a1) and the radius of curvature of the first bearing surface (R1) is substantially bigger than that (R2) of the second and third bearing surfaces (3a). **characterised in that** the bearing surfaces (2a1:3a) have substantially the form of half a cylinder.

2. Piston bearing arrangement according to claim 1, **characterised in that** the radius of curvature of the first bearing surface (R1) is at least 60%, preferably 70% bigger than the radius (R2) of the second and third bearing surfaces (3a).

3. Piston bearing arrangement according to claim 1 or 2, **characterised in that** the bearing surfaces (2a 1;3a) have the same center of curvature which is preferably also the center of rotation of the upper end (2a) of the connecting rod (2).

4. Piston bearing arrangement, according to any one of the preceding claims, **characterised in that** the piston pin means (3) comprise a separate piston pin inserted in the upper end (2a) of the connecting rod and that the second and third bearing surfaces (3a) overlap partly the first bearing surface (2a1) in the direction of the axis of the piston pin means (3).

5. Piston bearing arrangement according to any one of the preceding claims 1 to 3, **characterised in that** the piston pin means (3) are arranged as an integral part of the upper end (2a) of the connecting rod.

6. Piston bearing arrangement according to any one of the preceding claims, **characterised in that** the piston pin means (3) are provided with a relief (3a2) at the position of the second and third bearing surfaces (3a) on the opposite side thereof with regard to the axis of the piston pin means (3).

7. Piston bearing arrangement according to any one of the preceding claims, **characterised in that** said upper part (1a) and lower part (1b) of the piston (1) are provided with separate bearing shell elements (4;5) at the position of the bearing surfaces (2a1:3a), said bearing shell elements (4;5) being pressed to the respective bearing seats (1a1:1b1) in said parts of the piston by bolting (8) the upper part (1a) and the lower part (1b) together.

## Patentansprüche

1. Kolbenlageranordnung für eine Verbrennungskraftmaschine, wobei die Anordnung einen Kolben (1) mit wenigstens einem oberen Teil (1a) und einem unteren Teil (1b), die eng aneinander befestigt sind, und eine Pleuelstange (2), die ein oberes Ende (2a) hat, das mit Kolbenbolzenmitteln (3) versehen ist, die zwischen den Kolbenteilen (1a, 1b) eingepasst und drehbar mit dem Kolben (1) verzapft sind, wobei das oberen Ende (2a) der Pleuelstange (2) mit einer ersten Lagerfläche (2a1) versehen ist, die drehbar in Eingriff mit einer Innenfläche des oberen Teils (1a) des Kolbens (1) gebracht ist, und die Kolbenbolzenmittel (3) eine zweite und eine dritte Lagerfläche (3a) umfassen, die auf beiden Seiten der Pleuelstange (2) angeordnet sind und sich in Bezug auf die erste Lagerfläche (2a1) auf der entgegengesetzten Seite der Kolbenbolzenmittel (3) befinden, und der Krümmungsradius (R1) der ersten Lagerfläche wesentlich größer ist als derjenige (R2) der zweiten und der dritten Lagerfläche (3a), **dadurch gekennzeichnet, dass** die Lagerflächen (2a1; 3a) im Wesentlichen die Form eines halben Zylinders haben.

2. Kolbenlageranordnung nach Anspruch 1, **dadurch gekennzeichnet, dass** der Krümmungsradius (R1) der ersten Lagerfläche wenigstens 60 %, vorzugsweise 70 %, größer ist als der Radius (R2) der zweiten und der dritten Lagerfläche (3a).

3. Kolbenlageranordnung nach Anspruch 1 oder 2, **dadurch gekennzeichnet, dass** die Lagerflächen (2a1; 3a) den gleichen Krümmungsmittelpunkt haben, der vorzugsweise ebenfalls der Drehpunkt des oberen Endes (2a) der Pleuelstange (2) ist.

4. Kolbenlageranordnung nach einem der vorhergehenden Ansprüche, **dadurch gekennzeichnet, dass** die Kolbenbolzenmittel (3) einen gesonderten Kolbenbolzen umfassen, der in das obere Ende (2a) der Pleuelstange eingesetzt ist, und dass die zweite und die dritte Lagerfläche (3a) in der Richtung der Achse der Kolbenbolzenmittel (3) teilweise die erste Lagerfläche (2a1) überlappen.

5. Kolbenlageranordnung nach einem der vorhergehenden Ansprüche 1 bis 3, **dadurch gekennzeichnet, dass** die Kolbenbolzenmittel (3) als ein integraler Teil des oberen Endes (2a) der Pleuelstange angeordnet sind.

6. Kolbenlageranordnung nach einem der vorhergehenden Ansprüche, **dadurch gekennzeichnet, dass** die Kolbenbolzenmittel (3) mit einer Aussparung (3a2) an der Position der zweiten und der dritten Lagerfläche (3a) auf der entgegengesetzten Seite derselben in Bezug auf die Achse der Kolbenbolzenmittel (3) versehen sind.

7. Kolbenlageranordnung nach einem der vorhergehenden Ansprüche, **dadurch gekennzeichnet, dass** der obere Teil (1a) und der untere Teil (1b) des Kolbens (1) mit gesonderten Lagerschalenelementen (4; 5) an der Position der Lagerflächen (2a1; 3a) versehen sind, wobei die Lagerschalenelemente (4; 5) durch das Bolzen (8) des oberen Teils (1a) und des unteren Teils (1b) aneinander auf die jeweiligen Lagersitze (1a1; 1b1) in den Teilen aufgepresst sind.

## Revendications

1. Agencement de palier de piston pour un moteur à combustion interne, incluant un piston (1) avec au moins une partie supérieure (1a) et une partie inférieure (1b) étant étroitement fixés l'un à l'autre, et une tige de raccordement (2) ayant une extrémité supérieure (2a) fournie avec un moyen de tige de piston (3) ajusté entre lesdites pièces de piston (1a, 1b) et tourillonnant vers le piston (1), l'extrémité supérieure (2a) de la tige de raccordement (2) étant pourvue d'une première surface de palier (2a1) engagée de manière tournante avec une surface intérieure de la partie supérieure (1a) du piston (1), et le moyen de tige de piston (3) incluant une seconde et une troisième surfaces de palier (3a) placées sur l'un et l'autre côté de la tige de raccordement (2) et étant situées sur le côté opposé du moyen de tige de piston (3) par rapport à la première surface de piston (2a1), et le rayon de courbure de la première surface de palier (R1) est substantiellement plus grand que le rayon de courbure (R2) de la seconde et troisième surface de palier (3a), **caractérisé en ce que** les surfaces de palier (2a1 ; 3a) ont substantiellement la forme d'un demi-cylindre.

2. Agencement de palier de piston selon la revendication 1, **caractérisé en ce que** le rayon de courbure de la première surface de palier (R1) est au moins 60%, de préférence 70% plus grand que le rayon (R2) de la seconde et troisième surfaces de palier (3a).

3. Agencement de palier de piston selon les revendications 1 ou 2, **caractérisé en ce que** les surfaces de palier (2a1 ; 3a) ont le même centre de courbure qui est de préférence aussi le centre de rotation de l'extrémité supérieure (2a) de la tige de raccordement (2).

4. Agencement de palier de piston selon une quelconque des revendications précédentes, **caractérisé en ce que** le moyen de tige de piston (3) comprend une tige de piston séparée insérée dans l'extrémité supérieure (2a) de la tige de raccordement et **en ce que** la seconde et la troisième surfaces de palier (3a) chevauchent partiellement la première surface de palier (2a1) dans la direction de l'axe du moyen de tige de piston (3).

5. Agencement de palier de piston selon une quelconque des revendications précédentes selon les revendications 1 à 3 précédentes, **caractérisé en ce que** le moyen de tige de piston (3) est agencé comme une partie intégrante de l'extrémité supérieure (2a) de la tige de raccordement.

6. Agencement de palier de piston selon une quelconque des revendications précédentes, **caractérisé en ce que** le moyen de tige de piston (3) est pourvu d'une détente (3a2) à la position de la seconde et troisième surfaces de palier (3a) sur le côté opposé de celles-ci par rapport à l'axe du moyen de tige de piston (3).

7. Agencement de palier de piston selon une quelconque des revendications précédentes, **caractérisé en ce que** lesdites partie supérieure (1a) et partie inférieure (1b) du piston (1) sont pourvues d'éléments de quille de coussinet (4 ; 5) séparés à la position des surfaces de palier (2a1 ; 3a), lesdits éléments de coquille de coussinet (4 ; 5) étant pressés vers les sièges de palier respectifs (1a1 ; 1b1) dans lesdites parties du piston en boulonnant (8) conjointement la partie supérieure (1a) et la partie inférieure (1b).
